# EUROPÄISCHE PATENTSCHRIFT

(11) **EP 0 576 466 B1**
(45) Veröffentlichungstag und Bekanntmachung des Hinweises auf die Patenterteilung: **03.01.1996**
(21) Anmeldenummer: 92906096.0
(22) Anmeldetag: 29.02.1992
(51) Int. Cl.: F16K 3/06

(54) **VENTIL**
VALVE
SOUPAPE

(30) Priorität: 18.03.1991 DE 4108732
(43) Veröffentlichungstag der Anmeldung: 05.01.1994
(73) Patentinhaber: CERASIV GmbH INNOVATIVES KERAMIK-ENGINEERING, D-73207 Plochingen (DE)
(72) Erfinder: FRIEDERICH, Kilian, D-7310 Plochingen (DE); MICHELL, Winfried, D-7313 Reichenbach (DE); VON BEHR, Diedrich, D-7311 Hochdorf (DE)
(74) Vertreter: Scherzberg, Andreas Hans
(86) Internationale Anmeldenummer: EP9200442
(87) Internationale Veröffentlichungsnummer: WO9216778

(56) Entgegenhaltungen:
- EP-A- 0 043 456
- EP-A- 0 063 762
- DE-C- 3 733 730

## Beschreibung

Die Erfindung betrifft ein Ventil, insbesondere ein Ventil einer sanitären Mischbatterie mit mindestens zwei miteinander in Kontakt stehenden Dichtscheiben aus Keramik nach dem Oberbegriff des Anspruchs 1.

Dichtscheiben der eingangs genannten Art zur Verwendung in sanitären Mischbatterien sind weit verbreitet und z.B. in der EP-A-43 456 beschrieben. Gemäß dieser Schrift wird als Werkstoff ein Aluminiumoxid mit einem Zusatz von 3 bis 25 Gew.% Zirkoniumdioxid vorgeschlagen. Mit den bekannten Dichtscheiben wurde bereits eine Reduzierung der Verschiebekräfte erzielt, wobei trotz eines außerordentlich geringen Profiltraganteils von 10 bis 40 % noch eine ausreichende Abdichtwirkung erzielt werden konnte.

Gemäß der US-A-4,856,758 werden Dichtscheibenpaarungen (Plättchen) für Armaturen vorgeschlagen, wobei gemäß einer Ausführungsform eines der Plättchen aus Siliziumkarbid und das andere der beiden Plättchen aus einem Hartmaterial mit unterschiedlichen Eigenschaften bestehen soll. Beispiele für solche Dichtscheibenpaarungen sind Siliziumkarbid/Aluminiumoxid oder Siliziumkarbid/Aluminiumsilikat. Sofern Siliziumkarbid als Werkstoff für die Ausbildung von zwei miteinander in Eingriff stehenden Dichtscheiben vorgeschlagen wird, soll das Siliziumkarbid unterschiedliche Eigenschaften besitzen. Die engere Lehre dieser Schrift geht dahin, bei der Dichtscheibe mit der geringeren Härte eine weniger glatte Oberfläche vorzusehen, die eine Vielzahl von mikroskopischen Vertiefungen aufweist, so daß die Stützfläche zwischen den beiden zusammenwirkenden Plättchen stark herabgesetzt wird. Diese Lehre ist im Sinn der Ausbildung eines geringen Profiltraganteiles zu verstehen. Die gemäß dieser Schrift einzusetzenden Siliziumkarbidwerkstoffe werden durch Infiltrierung von kohlenstoffhaltigen Siliziumkarbidrohlingen mit metallischem Silizium - sogenanntes reaktionsgesintertes oder reaktionsgebundenes Siliziumkarbid - hergestellt.

In der DE-C-38 29 506 wird ein Ventil beschrieben, bei dem das verstellbare Ventilelement und das Ventilsitzelement aus unterschiedlichen Keramikwerkstoffen bestehen, wobei z.B. die Paarung oxidische Werkstoffe mit karbidischen oder nitridischen Werkstoffen genannt ist. Ein ähnlicher Offenbarungsgehalt geht aus der DE-U-87 15 044 hervor, die für das Ventiloberteil einer Sanitärarmatur mit Einlaßscheibe und Steuerscheibe die Werkstoffpaarunc Aluminiumoxid und Siliziumkarbid vorschlägt. Bei dem hier vorgeschlagenen Siliziumkarbidwerkstoff handelt es sich um ein reaktionsgesintertes Siliziumkarbid (SiC-Si), wie bereits zur US-A-4,856,758 diskutiert. Der gleiche Werkstoff wird für Ventilscheiben gemäß der EP-A-63 627 und der EP-A-63 762 genannt. In den beiden letztgenannten Schriften wird für die Oberfläche einer Ventilscheibe ein Ra-Wert im Bereich von 0,1 bis 0,15 µm vorgeschlagen. Der Nachteil des mehrfach vorgeschlagenen reaktionsgesinterten Siliziumkarbids besteht infolge seines metallischen Anteils in seiner geringen Erosions- und Korrosionsbeständigkeit. Ein weiteres Problem der bekannten Dichtscheibenkombinationen in sanitären Mischbatterien besteht darin, daß von ihnen neben einer außerordentlich hohen Abdichtung gleichzeitig geringe Verschiebungskräfte bei der Betätigung gefordert werden. Trotz der vielen Vorschläge im vorstehend diskutierten Stand der Technik ist es bisher noch nicht in befriedigender Weise gelungen, die Verschiebungskräfte zu reduzieren, ohne daß Fett als Hilfsmittel bei der Montage des Ventils zwischen die in Kontakt stehenden Dichtscheiben gegeben wurde. Es hat sich jedoch gezeigt, daß das eingegebene Fett nach und nach ausgespült wird und seine Wirkung verloren geht, mit dem Ergebnis, daß die Armatur schwergängig wird. Außerdem besteht ein weiterer Nachteil in dem zusätzlichen Produktionsgang der Fetteingabe.

Die gattungsgemäße DE-C1-37 33 730 zeigt eine Gleit- oder Dichtelementepaarung. Diese Gleit- oder Dichtelementepaarung besteht aus mindestens einem drucklos gesinterten keramischen zweiphasigen Formkörper, der mittels seiner Funktionsoberfläche mit einem zweiten Element in gleitendem oder dichtendem Eingriff steht. Der Formkörper besteht aus Siliziumkarbidkeramik. Der Herstellungsprozeß schließt eine abtragende Bearbeitung durch Schleifen und/oder Läppen und/oder Polieren ein. Es ist ferner ausgeführt, daß kleine Reibungskräfte dann erhalten werden, wenn mindestens eine Oberfläche der miteinander im Eingriff stehenden Elemente eine hohe Mikrowelligkeit aufweisen. Die hohe Mikrowelligkeit deutet auf einen geringeren Flächentraganteil hin.

Der Erfindung liegt die Aufgabe zugrunde, ein Ventil nach dem Oberbegriff des Anspruchs 1 zu schaffen, dessen Dichtscheiben das nachfolgende Anforderungsprofil erfüllen:
- verbesserte Erosions- und Korrosionsbeständigkeit im Vergleich zu infiltriertes Silizium enthaltenden Dichtscheiben aus Siliziumkarbid,
- niedrige Verschiebekraft und gute Abdichtwirkung,
- die Fetteingabe soll verzichtbar sein,
- die niedrige Verschiebekraft soll von Anfang an aber auch nach Langzeitbenutzung noch gegeben sein.

Erfindungsgemäß wird diese Aufgabe dadurch gelöst, daß die Dichtscheiben an ihrer Funktionsoberfläche einen durch Schleifen und/oder Läppen und/oder Polieren eingestellten Profiltraganteil von mindestens 75 % und einen im Bereich von 0,01 bis 0,1 µm liegenden Mittenrauhwert Rₐ aufweisen.

Mit dem in Patentansprüchen und Beschreibung verwendeten Begriff "durch druckloses Sintern, Heißpressen oder durch druckloses Sintern, gefolgt von einem heißisostatischen Preßvorgang hergestellte Siliziumkarbidkeramik" sind die durch Infiltrieren mit metallischem Silizium erzeugten Siliziumkarbide, sogenanntes reaktionsgesintertes oder reaktionsgebundenes Siliziumkarbid von der Erfindung ausgeschlossen. Ferner fallen nicht unter die vorliegende Erfindung solche Dichtscheiben, die zusätzlich mit einer Beschichtung versehen sind.

Der Begriff "Funktionsfläche" kennzeichnet die Kontaktfläche der Dichtscheiben. Die vorliegende Erfindung ist anwendbar bei Ventilen von sanitären Mischbatterien der üblicheren Form mit lediglich zwei Dichtscheiben, ist aber hierauf nicht beschränkt und kann auch bei solchen Mischbatterien eingesetzt werden, die mit z.B. drei Dichtscheiben arbeiten.

Das Siliziumkarbid an sich bildet keinen Gegenstand der vorliegenden Erfindung, erfindungsgemäß können die Dichtscheiben aus Siliziumkarbidwerkstoffen bestehen wie sie z.B. in der DE-A-24 49 662, DE-A-26 24 641 oder DE-C-37 33 730 beschrieben sind.

Gemäß einer besonders bevorzugten Ausführungsform weisen die Dichtscheiben einen Mittenrauhwert Rₐ zwischen 0,05 und 01. µm auf. Ein unter einem Wert von 0,05 abgesenkter Mittenrauhwert führt zu höheren Verschiebekräften.

Im Gegensatz zu den in der EP-A-63 762 und EP-A-63 627 beschriebenen reaktionsgesinterten Siliziumkarbidwerkstoffen werden gemäß der Erfindung Siliziumkarbidkeramiken mit einer Dichte > 3,05 g/cm³ eingesetzt. Solche Siliziumkarbidkeramiken sind mechanisch besonders stabil, gegen chemische Einflüsse besonders widerstandsfähig, zeigen ein besonders geringes Verschleißverhalten, so daß auch nach längerem Einsatz die volle Funktionsfähigkeit des Ventils gegeben ist.

Gemäß einer weiteren vorzugsweisen Ausführungsform bestehend die miteinander in Kontakt stehenden Dichtscheiben aus der gleichen Siliziumkarbidkeramik. Der Rahmen der Erfindung wird jedoch noch nicht verlassen, wenn geringfügige - z. B. produktionsbedingte - Abweichungen zwischen zwei miteinander in Kontakt stehenden Dichtscheiben vorliegen. Die Unterschiede zwischen den einzelnen miteinander in Kontakt stehenden Dichtscheiben sollten aber zweckmäßigerweise einen Dichteunterschied von max. 0,25 g/cm³ nicht überschreiten, wobei keine der Dichtscheiben jedoch eine Dichte < 3,05 g/cm³ aufweist.

Als zweckmäßig hat es sich entsprechend der Erfindung erwiesen, den Profiltraganteil auf max. 95 % zu begrenzen, da sich gezeigt hat, daß nach längerer Benutzungsdauer der Profiltraganteil noch geringfügig zunimmt, so daß bei Dichtscheiben mit einem Ausgangswert des Profiltraganteils von mehr als 95 % nach einer länger andauernden Benutzung des Ventils die Leichtgängigkeit, d. h. geringe Verschiebe- und Löslösekräfte nicht mehr gewährleistet ist.

Da sich gezeigt hat, daß bei der vorliegenden Erfindung die bisher vielfach für notwendig gehaltene Fetteingabe zwischen die in Kontakt stehenden Dichtscheiben nicht mehr erforderlich ist, besteht insofern ein weiterer Vorteil, als mit dem Verzicht auf die Fetteingabe ein weiterer Produktionsvorteil resultiert.

Dadurch, daß die Dichtscheiben entsprechend der Erfindung eine Vickers-Härte < 2.800 (HV 0,5; DIN 50 133) aufweisen, wird ein weiterer Beitrag zur Langlebigkeit der erfindungsgemäßen Dichtscheibenpaarung geleistet.

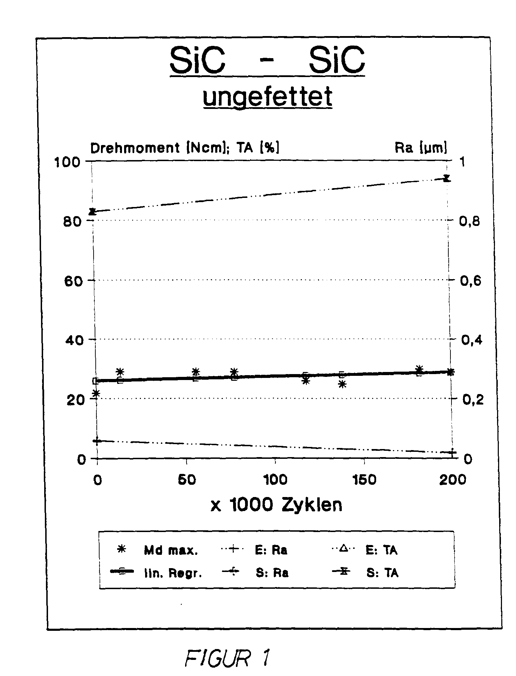

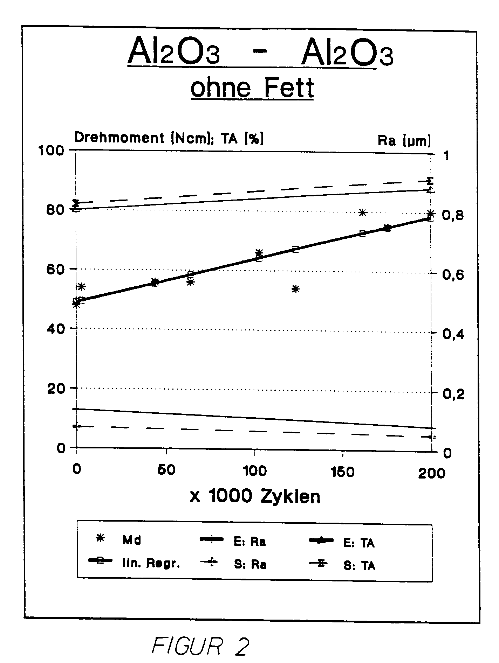

Die Figuren 1 und 2 zeigen die Veränderung des Drehmoments, Profiltraganteils und des Ra-Wertes nach 200.000 Betätigungszyklen bei einer erfindungsgemäßen Dichtscheibenpaarung, bei der beide Ventilscheiben aus einem Siliziumkarbid nach der DE-C-37 33 730 hergestellt sind, wobei kein Fett zwischen die Ventilscheiben gegeben wurde (Figur 1) und bei der Paarung handelsüblicher Ventilscheiben aus Aluminiumoxid in ungefettetem Zustand (Figur 2).

Aus dem Vergleich der Figuren 1 und 2 wird deutlich erkennbar, daß die Verschiebekräfte - hier ausgedrückt als Drehmoment (Ncm) - bei der erfindungsgemäßen Ventilscheibenkombination auch nach 200.000 Betätigungszyklen den bereits von Anfang an niedrigen Drehmomentwert beibehalten. Der Profiltraganteil nimmt dabei gleichzeitig zu, während der arithmetische Mittenrauhwert Ra noch geringfügig abnimmt.

Demgegenüber zeigt Figur 2 mit den im ungefetteten Zustand montierten Aluminiumoxid-Dichtscheiben extrem hohe Verschiebekräfte.

In den Figuren bedeuten:
- E: = Einlaßscheibe
- S: = Steuerscheibe
- TA: = Profiltraganteil

## Patentansprüche

1. Ventil, insbesondere einer sanitären Mischbatterie mit mindestens zwei miteinander in Kontakt stehenden Dichtscheiben aus Keramik, wobei die miteinander in Kontakt stehenden Dichtscheiben aus durch druckloses Sintern oder Heißpressen oder durch druckloses Sintern, gefolgt von einem heißisostatischen Preßvorgang, hergestellter Siliziumkarbidkeramik bestehen und die Dichte der Dichtscheiben größer als 3,05 g/cm³ ist, **dadurch gekennzeichnet** , daß die Dichtscheiben an ihrer Funktionsoberfläche einen durch Schleifen und/oder Läppen und/oder Polieren eingestellten Profiltraganteil von mindestens 75 % und einen im Bereich von 0,01 bis 0,1 µm liegenden Mittenrauhwert Rₐ aufweisen.

2. Ventil nach Anspruch 1, **dadurch gekennzeichnet**, daß der Mittenrauhwert Rₐ im Bereich von 0,05 bis 0,1 µm liegt.

3. Ventil nach Anspruch 1 oder 2, **dadurch gekennzeichnet**, daß die Dichtscheiben einen Profiltraganteil bis zu 95 % aufweisen.

4. Ventil nach einem der Ansprüche 1 bis 3, **dadurch gekennzeichnet** , daß auf die Funktionsflächen der miteinander in Eingriff stehenden Dichtscheiben kein Fett aufgebracht ist.

5. Ventil nach einem der Ansprüche 1 bis 4, **dadurch gekennzeichnet** , daß die Dichtscheiben aus einer Siliziumkarbidkeramik mit einer Vickers Härte < 2.800 (HV 0,5; DIN 50 133) bestehen.

## Claims

1. Valve, in particular of a sanitary mixing tap, having at least two ceramic sealing discs in contact with one another, with the sealing discs in contact with one another comprising silicon carbide ceramic produced by pressureless sintering or hot pressing or pressureless sintering followed by a hot isostatic pressing process and the density of the sealing discs being greater than 3.05 g/cm³, characterized in that the sealing discs have, on their functional surface, a percentage profile contact area of at least 75% set by grinding and/or lapping and/or polishing and a mean roughness Rₐ in the range from 0.01 to 0.1 µm.

2. Valve according to Claim 1, characterized in that the mean roughness Rₐ is in the range from 0.05 to 0.1 µm.

3. Valve according to Claim 1 or 2, characterized in that the sealing discs have a percentage profile contact area of up to 95%.

4. Valve according to any of Claims 1 to 3, characterized in that no grease is applied to the functional surfaces of the sealing discs which are in contact with one another.

5. Valve according to any of Claims 1 to 4, characterized in that the sealing discs comprise a silicon carbide ceramic having a Vickers hardness of < 2800 (HV 0.5; DIN 50 133).

## Revendications

1. Obturateur, notamment d'un mélangeur sanitaire, comportant au moins deux disques d'étanchéité en céramique qui sont en contact l'un avec l'autre, les disques en contact étant fabriqués en céramique de carbure de silicium par frittage sans pression, par compactage à chaud ou par frittage sans pression suivi d'un pressage isostatique à chaud et la densité des disques d'étanchéité étant supérieure à 3,05 g/cm³, caractérisé par le fait qu'au niveau de leur surface active, les disques d'étanchéité présentent un pourcentage de profil en contact d'au moins 75 % obtenu par meulage et/ou rodage et/ou polissage et une rugosité moyenne Rₐ comprise dans la plage allant de 0,01 à 0,1 µm.

2. Obturateur selon la revendication 1, caractérisé par le fait que la rugosité moyenne est située dans la plage allant de 0,05 à 0,1 µm.

3. Obturateur selon la revendication 1 ou la revendication 2, caractérisé par le fait que les disques d'étanchéité présentent un pourcentage de profil en contact allant jusqu'à 95 %.

4. Obturateur selon l'une des revendications 1 à 3, caractérisé par le fait qu'aucune graisse n'est appliquée sur les surfaces actives des disques d'étanchéité en contact l'un avec l'autre.

5. Obturateur selon l'une des revendications 1 à 4, caractérisé par le fait que les disques d'étanchéité sont réalisés en une céramique de carbure de silicium doté d'une dureté Vickers < 2800 (HV 0,5; DIN 50 133).
